Europäisches Patentamt

European Patent Office

Office européen des brevets

(19)

(11) Veröffentlichungsnummer: **0 224 196 B1**

# (12) EUROPÄISCHE PATENTSCHRIFT

(45) Veröffentlichungstag der Patentschrift: **08.05.91**

(51) Int. Cl.5: **G01J 3/453**

(21) Anmeldenummer: **86116059.6**

(22) Anmeldetag: **20.11.86**

(54) **Verfahren und Vorrichtung zur Reduktion der Datenrate bei der Fourierspektroskopie.**

(30) Priorität: **28.11.85 DE 3542161**

(43) Veröffentlichungstag der Anmeldung:
**03.06.87 Patentblatt 87/23**

(45) Bekanntmachung des Hinweises auf die
Patenterteilung:
**08.05.91 Patentblatt 91/19**

(84) Benannte Vertragsstaaten:
**AT BE CH DE ES FR GB GR IT LI LU NL SE**

(56) Entgegenhaltungen:
**WO-A-84/03558**
**DE-A- 1 547 218**

**IBM TECHNICAL DISCLOSURE BULLETIN,
Band 26, Nr. 6, November 1983, Seite 2928;
R.J. BELLAR et al.: "Improved FT-IR spectral
band shapes"**

**INTERNATIONAL LABORATORY, Band 15, Nr.
2, März 1985, Seiten 38-48, Fairfield, Connecticut, US; F.L. BAUDAIS et al.: "Electronic
fourier transform spectroscopy"**

**IBM TECHNICAL DISCLOSURE BULLETIN,
Band 23, Nr. 6, November 1980, Seiten 2393,
2394; D. KUEHL et al.: "Circular wedge large
aperture field widened interferometer"**

(73) Patentinhaber: **Erwin Kayser-Threde Gesellschaft mit beschränkter Haftung
Wolfratshauser Strasse 44-48
W-8000 München 70(DE)**

(72) Erfinder: **Rippel, Harald, Dr.Dipl.-Phys.
Irchenhauser Strasse 2
W-8000 München 70(DE)**

(74) Vertreter: **Hoffmann, Klaus, Dr. rer. nat. et al
Hoffmann . Eitle & Partner Patentanwälte
Postfach 81 04 20 Arabellastrasse 4
W-8000 München 81(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren sowie eine Vorrichtung zur Reduktion der Datenrate des bei der Fourierspektroskopie erhaltenen, digitalisierten Meßsignals. Dabei wird in einem Zweistrahl-Interferometer, dessen bewegter Spiegel mit möglichst konstanter Geschwindigkeit verschoben wird, das Interferogramm einer unbekannten, zu analysierenden Meßstrahlung erzeugt und in ein analoges, erstes elektrisches Signal hoher Frequenz umgewandelt.

Das so erhaltene elektrische Signal entspricht der Fourier-Transformierten des Energiespektrums, also der Strahlungsstärke in Abhängigkeit von der Wellenlänge der interferierenden Strahlung. Der Zusammenhang zwischen der optischen Frequenz K des Spektrums und der elektrischen Frequenz F ist gegeben durch

$$F = v.K \quad (1)$$

v ist dabei die optische Vorschubgeschwindigkeit des bewegten Spiegels im Interferometer. Aus obiger Gleichung (1) wird ersichtlich, daß man bei Interferometern mit hoher Vorschubgeschwindigkeit des Spiegels ein Meßsignal entsprechend hoher elektrischer Frequenzen erhält. Diese Frequenzen liegen typischerweise im Bereich von 10 bis 500 KHz. Das Interferogramm-Signal wird üblicherweise mit digitalen Rechern ausgewertet. Hierzu muß das analoge elektrische Meßsignal zunächst digitalisiert werden. Gemäß dem Abtasttheorem der Informationstheorie muß das Analogsignal mindestens mit der doppelten Signalfrequenz abgetastet werden, um eine getreue Rekonstruktion des ursprünglichen Interferogramms bzw. des Spektrums zu ermöglichen. Dies führt bei den erwähnten hohen Frequenzen des Meßsignals zu sehr hohen Datenraten des digitalisierten Signals, dessen anschließende Weiterverarbeitung und Speicherung in dem angeschlossenen Rechner deshalb Probleme bereitet.

Das vom Interferometer gelieferte Interferogramm enthält alle Informationen über das Spektrum der zu analysierenden Meßstrahlung von der Frequenz 0 bis zur oberen optischen Grenzfrequenz. Im allgemeinen ist jedoch nicht der gesamte Frequenzbereich des Spektrums für die Analyse interessant, sondern nur ein bestimmter, durch die untere Eckfrequenz $F_u$ und die obere Eckfrequenz $F_o$ gekennzeichneter Spektralbereich. Die obere Eckfrequenz $F_o$ des interessierenden Spektralbereichs fällt dabei in der Regel mit der oberen optischen Grenzfrequenz des Interferogramms zusammen. Selbst wenn man mit dem angeschlossenen Rechner also nur den oberen Spektralbereich des Interferogramms auswertet, beispielsweise durch Ausfilterung der niederen Frequenzen mittels eines elektrischen Hochpasses, bleibt das Problem zu hoher, kaum zu bewältigender Datenraten des digitalisierten Meßsignals im wesentlichen bestehen.

Es ist daher Aufgabe der Erfindung, ein Verfahren bzw. eine entsprechende Vorrichtung zur Reduktion der Datenrate des bei der Fourierspektroskopie erhaltenen, digitalisierten Meßsignals zu schaffen.

Bei der Lösung dieser Aufgabe wird von einem Verfahren zur Erzeugung eines Interferogramms der eingangs dargestellten Art ausgegangen; gelöst wird die Aufgabe bei einem Zweistrahl-Interferometer mit bewegtem Spiegel dadurch, daß zusätzlich zu dem eigentlichen optischen Interferenzsignal, das in ein analoges erstes elektrisches Signal umgewandelt wird, ein zweites analoges elektrisches Signal erzeugt wird, und zwar durch Einstrahlen eines Laserstrahls fester optischer Frequenz in das Interferometer parallel zur einfallenden Meßstrahlung, Detektion des optischen Interferenzsignals dieses Laserstrahls und durch Umwandlung des Laser-Interferenzsignals in ein entsprechendes elektrisches Signal, wobei dessen Frequenz proportional der Abweichung der momentanen Ist-Geschwindigkeit des bewegten Spiegels von dessen konstanter Soll-Geschwindigkeit moduliert ist, und ferner dadurch, daß eine Frequenzmischung des analogen ersten elektrischen Signals mit dem analogen zweiten elektrischen Signal erfolgt, und daß die aufgrund dieser Frequenzmischung erhaltenen Differenzfrequenzen herausgefiltert werden und das herausgefilterte Signal digitalisiert wird.

Bei der Lösung der auf die Angabe einer entsprechenden Vorrichtung gerichteten Aufgabe wird ausgegangen von einem an sich bekannten Zweistrahl-Interferometer, dessen bewegter Spiegel mit möglichst konstanter Geschwindigkeit verschiebbar ist, und das einen opto-elektrischen Wandler zur Umwandlung des Interferogramms in ein entsprechendes, erstes elektrisches Signal aufweist; gelöst wird die Aufgabe durch eine zusätzlich vorgesehene Laserquelle, deren Laserstrahl parallel zur Meßstrahlung in das Interferometer einfällt, einen weiteren opto-elektrischen Wandler zur Umwandlung des Laser-Interferogramms in ein entsprechendes zweites elektrisches Signal, ferner durch einen Frequenzmischer zur Mischung des das Interferogramm darstellenden, elektrischen ersten Signals mit dem elektrischen zweiten Signal, ein elektrisches Tiefpaßfilter zur Herausfilterung der im Frequenzmischer entstandenen Differenzfrequenzen und schließlich durch einen Analog-Digital-Wandler zur Digitalisierung des herausgefilterten Signals.

EP 0 224 196 B1

Aus der DE-AI 547 218 ist eine optisch-mechanisch-elektrische Anordnung zur Fourier-Transformation bekannt, mittels der die Fourier-Transformierte ohne Einsatz von analogen oder digitalen Rechnern erhalten werden kann. Bei dieser vorbekannten Anordnung wird das mittels eines Michelson-Interferometers erhaltene Interferogramm einer unbekannten Meßstrahlung in einem Empfänger aufgezeichnet. Man erhält somit die Fuktion $H_{(u)}$, die mit Hilfe der weiteren Anordnung Fourier-transformiert werden soll. Hierzu wird mittels eines zweiten Interferometers das Interferogramm einer Weißlichtquelle erzeugt, auf ein Spektrometer geleitet und dort spektral zerlegt. In der Brennebene des Spektrometers ist ein vielzelliger Empfänger angeordnet. Unter bestimmten Randbedingungen wird dort parallel und zeitgleich zur Funktion $H_{(u)}$ eine Reihe von Cosinus-Funktionen erzeugt. Das Meßstrahlungs-Signal $H_{(u)}$ und die parallel erzeugten Cosinus-Funktionen werden anschließend in einem Multiplikator multipliziert und danach in einem Integrator integriert. Auf diese Weise erhält man als Ergebnis, unter der Vorraussetzung der Einhaltung bestimmter Randbedingungen, die Fourier-Transformierte F von $H_{(u)}$.

Das in der erwähnten Deutschen Offenlegungsschrift beschriebene Verfahren und die zugehörige Vorrichtung unterscheiden sich sowohl hinsichtlich der Intention als auch der physikalischen Vorgehensweise grundlegend von dem erfindungsgemäßen Verfahren bzw. der zugehörigen Vorrichtung. So wird bei dem hier vorgeschlagenen Verfahren nicht eine Reihe von verschiedenen Cosinus-Funktionen, sondern genau eine einzige erzeugt. Die komplizierten Randbedingungen des vorbekannten Verfahrens brauchen hierbei nicht erfüllt zu sein. Gemäß der vorliegenden Erfindung findet ferner eine Mischung des analogen ersten elektrischen Signals, welches das Interferogramm darstellt, mit einem analogen zweiten elektrischen Signal statt, und nicht eine Muliplikation. Der in der vorbekannten Anordnung enthaltene Integrator bewirkt eine zeitliche Aufintegration des vom Multiplikator abgegebenen Signals. Hingegen werden bei der vorliegenden Erfindung die aufgrund der Frequenzmischung im Frequenzmischer erhaltenen Differenzfrequenzen herausgefiltert, was die Rauschbandbreite bzw. Rückfaltungseffekte im Frequenzbereich des Signals begrenzt. Eine Reduktion der Datenrate eines gegebenenfalls digitalisierten Meßsignals ist jedenfalls mit dem vorbeschriebenen Verfahren bzw. der vorbekannten Anordnung nicht möglich.

Aus INTERNATIONAL LABORATORY, Band 15, Nr. 2, März 1985, Seiten 38-48, Fairfield, Connecticut, US; F.L. BAUDAIS et al.: "Electronic fourier transform spectroscopy" ist es bekannt, bei der Spektralmessung einen stabilisierten Helium-Neon-Laser als Referenz zur internen Wellenlängen-Kalibrierung einzusetzen.

Aus IBM TECHNICAL DISCLOSURE BULLETIN, Band 23, Nr. 6, November 1980, Seiten 2393, 2394; D. KUEHL et al.: "Circular wedge large aperture field widened interferometer" ist es bekannt, in einem Einblendspiegel eine kleine Öffnung vorzusehen, um auf diese Weise einen Refferenzstrahl in einen Meßstrahlengang einzublenden.

Wesentliches Merkmal vorliegender Erfindung ist also die Mischung des das Interferogramm darstellenden, ersten analogen Signals mit einem zweiten Signal, dessen Frequenz von der Bewegung, bzw. Bewegungsabweichung des bewegten Spiegels im Interferometer moduliert wird. Zum besseren Verständnis des erfindungsgemäßen Verfahrens, bzw. der erfindungsgemäßen Vorrichtung wird kurz auf die Verhältnisse eingegangen, die sich ergeben, würde man das Interferogramm-Signal statt dessen mit einem Signal fester, unmodulierter Frequenz mischen.

Durch die Mischung der Signalfrequenz $F_s$ mit einer festen Mischfrequenz $F_m$ in einem analogen Frequenzmischer erhält man die Summenfrequenz $F_m + F_s$ und die Differenzfrequenz $F_m - F_s$. Da das digitalisierte Meßsignal eine möglichst geringe Datenrate aufweisen soll, und man deshalb mit einer möglichst niedrigen Abtastfrequenz auskommen muß, werden die entstandenen Differenzfrequenzen herausgefiltert und nur diese in digitalisierter Form dem angeschlossenen Rechner zugeführt.

Da der Antrieb des optischen Vorschubs des bewegten Spiegels im Interferometer die gewünschte konstante Soll-Geschwindigkkeit $v_0$ nur mit einer bestimmten Genauigkeit $\Delta v$ einhält, variiert die momentane Ist-Geschwindigkeit um eben diesen Wert $\Delta v$:

$$v_{Ist} = v_0 + \Delta v \qquad (2)$$

Aufgrund des Zusammenhangs zwischen optischer Frequenz K des Spektrums und elektrischer Frequenz F des Meßsignals gemäß Gleichung (1) geht die Abweichung der Ist-Geschwindigkeit des bewegten Spiegels von seiner Soll-Geschwindigkeit in die Signalfrequenz $F_s$ ein:

3

$$\Delta F_s = \Delta v . K_s \qquad (3)$$

Die Geschwindigkeitsabweichungen des bewegten Spiegels betragen typischerweise 1%. Die elektrische Signalfrequenz $F_s$ ist mit demselben relativen Fehler behaftet.

Die Mischung der Signalfrequenz $F_s$ mit der Mischfrequenz $F_m$ läßt die Differenzfrequenz $F_d$ entstehen:

$$F_d = F_m - F_s \qquad (4)$$

Diese Frequenz $F_d$ ist sehr viel kleiner als die ursprüngliche Signalfrequenz $F_s$. Sie ist mit einem relativen Fehler behaftet:

$$\frac{\Delta F_d}{F_d} = \left| \frac{\Delta F_s}{F_m - F_s} \right| \qquad (5)$$

Der nunmehr auftretende relative Fehler ist also um den Faktor

$$\frac{F_s}{F_m - F_s}$$

größer. Um eine möglichst geringe Differenzfrequenz zu erhalten, wird die Mischfrequenz $F_m$ so gewählt, daß sie nur möglichst wenig über der Signalfrequenz $F_s$ liegt. Je kleiner aber die Differenz $F_m-F_s$ wird, um so größer wird der relative Fehler in der erzeugten Differenzfrequenz. Obwohl der absolute Fehler unverändert in der Größenordnung von 1% liegt, verhindert der um ein Vielfaches größere relative Fehler eine exakte Analyse des zu untersuchenden Spektrums.

Gemäß der Erfindung wird nun das eben beschriebene Anwachsen des relativen Fehlers bei der Frequenztransformation vermieden, wenn anstelle einer konstanten Mischfrequenz ein elektrisches Signal verwendet wird, das seine Frequenz entsprechend den unvermeidbaren Schwankungen der idealer Weise konstanten Vorschubgeschwindigkeit des bewegten Spiegels ändert. Der relative Fehler der Differenzfrequenz $F_d$ ergibt sich dann - unter Verwendung von Gleichung (1) - zu:

$$\frac{\Delta F_d}{F_d} = \frac{\Delta F_m - \Delta F_s}{F_m - F_s} = \frac{\Delta v(K_m - K_s)}{v(K_m - K_s)} \qquad (6)$$

Trotz der Transformation des Meßsignals zu wesentlich niedrigeren Frequenzen hin vergrößert sich der relative Fehler nicht über das unvermeidbare Maß $\frac{\Delta v}{v}$ des absoluten Fehlers, der durch die Geschwindigkeitsschwankungen des Vorschubs des bewegten Spiegels verursacht wird. Die Frequenztransformation erfolgt also fehlerneutral.

Das aufgrund der Frequenzmischung erhaltene Differenzsignal weist wesentlich geringere Frequenzen auf als das ursprüngliche Meßsignal. Die zur einwandfreien, eine vollständige Rekonstruktion des Interferogramms erlaubende Digitalisierung erforderliche Abtastfrequenz kann dadurch ebenfalls wesentlich verringert werden, so daß das schließlich in digitaler Form vorliegende Interferogramm eine wesentlich verringerte Datenrate aufweist. Die Anwendung des erfindungsgemäßen Verfahren ermöglicht deshalb die Auswertung des Interferogramms mit digitalen Rechnern, die die extrem hohe Datenrate eines nicht frequenztransformierten, digitalisierten Interferogramm-Meßsignals nicht bewältigen könnten, ohne daß gleichzeitig eine Verfälschung des Meßsignals in Kauf genommen werden müßte. Selbstverständlich müssen die beiden elektrischen Signale mit gleicher Phasenlage gemischt werden.

Um einen möglichst kleinen Frequenzabstand zwischen dem zweiten elektrischen Signal und dem Interferogramm-Signal zu erhalten, ist es zweckmäßig, die Grundfrequenz des zweiten elektrischen Signals vor der Frequenzmischung auf einen Frequenzwert herunterzuteilen, der in der Nähe der oberen Grenzfrequenz des das Interferogram darstellenden Signals liegt. Hierzu kann ein elektrischer Frequenzteiler dienen, der vor den Frequenzmischer geschaltet ist.

Bei einer bevorzugten Ausführung der erfindungsgemäßen Vorrichtung ist vor der Meßöffnung des Interferometers ein Einblendspiegel vorgesehen, über den die Meßstrahlung eingeblendet wird, und weist dieser Einblendspiegel eine kleine Öffnung für den Laserstrahl auf. Hierdurch gelingt es auf einfache Weise, den Laserstrahl parallel zur Meßstrahlung in das Interferometer einfallen zu lassen.

Zweckmäßigerweise ist ein Umlenkspiegel vorgesehen, der das optische Interferogramm auf einen opto-elektrischen Wandler wirft, und der ebenfalls eine kleine Öffnung aufweist, durch welche der Laserstrahl ungehindert hindurchstrahlen kann. Die Detektion des Laserstrahls kann dann mittels eines weiteren kleinen Umlenkspiegels erfolgen, der das Laserlicht auf den weiteren opto-elektrischen Wandler wirft. Auf diese Weise wird eine weitestgehende Entkopplung der Strahlengänge von Meßstrahlung und Laserstrahl erzielt.

Ein Ausführungsbeispiel der Erfindung wird nachstehend anhand der beigefügten Zeichnungen erläutert. Es zeigen:

Fig. 1    das mit einem Zweistrahl-Interferometer erzeugte Interferogramm einer zu analysierenden Meßstrahlung, schematisch,

Fig. 2    die Mischung des das Interferogramm darstellenden Signals $F_s$ mit einem zweiten elektrischen Signal $F_m$, im Prinzip;

Fig. 3    die gemäß Fig. 2 erhaltenen Mischsignale, schematisch;

Fig. 4    eine erfindungsgemäße Vorrichtung mit Laserquelle, in einem Prinzipbild.

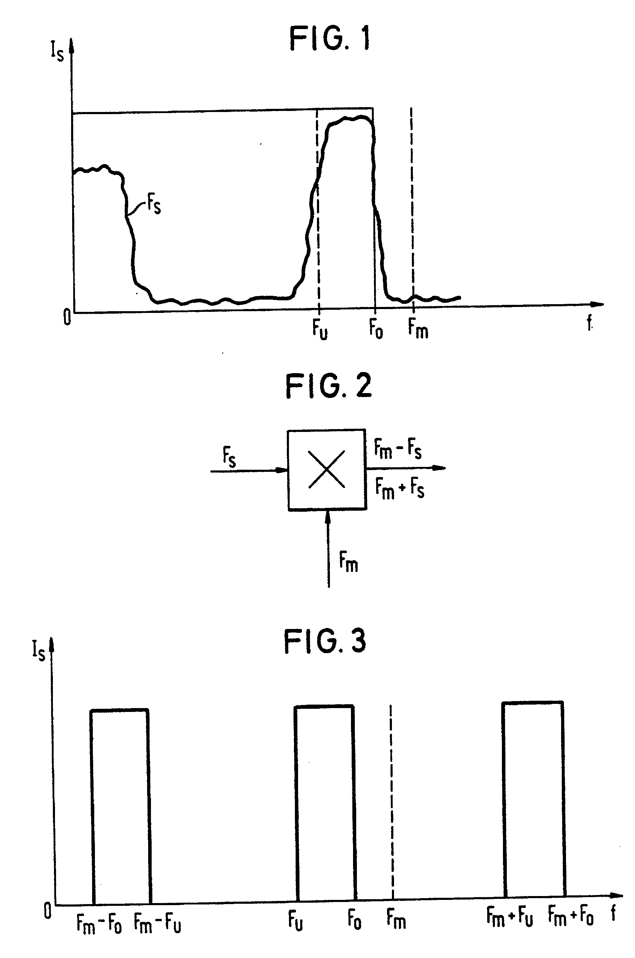

In Fig. 1 ist das bereits in ein analoges elektrisches Signal umgewandelte Interferogramm einer zu analysierenden Meßstrahlung dargestellt. Es ist die Strahlungsintensität $I_s$ über der Frequenz f aufgetragen. Der für die Analyse interessante Spektralbereich, ist durch die untere Eckfrequenz $F_u$ und die obere Eckfrequenz $F_o$ definiert ist. Ebenfalls eingetragen ist die Grundfrequenz eines zweiten elektrischen Signals $F_m$, das dem Interferogramm-Signal $F_s$ zugemischt werden soll. Die Frequenz von $F_m$ liegt nur wenig über der oberen Eckfrequenz $F_o$.

In Fig. 2 ist das Prinzip der Frequenzmischung des Interferogramm-Signals $F_s$ und des zweiten elektrischen Signals $F_m$ dargestellt. Am Ausgang des Frequenzmischers treten die Summenfrequenzen $F_m + F_s$ und die Differenzfrequenzen $F_m - F_s$ auf.

Fig. 3 verdeutlicht die Lage der durch die Frequenzmischung erhaltenen Mischsignale im Frequenzspektrum. Zur Weiterverarbeitung vorgesehen sind lediglich die Differenzfrequenzen. Deren untere Eckfrequenz $F_m - F_o$ liegt bereits relativ nahe bei der Frequenz 0, während die obere Eckfrequenz $F_m - F_u$ immer noch um ein mehrfaches niedriger liegt als die untere Eckfrequenz $F_u$ des ursprünglichen Interferogramm-Signals. Die Differenzfrequenzen werden vor der Digitalisierung von den übrigen entstandenen Mischfrequenzen getrennt, beispielsweise durch ein elektrisches Tiefpaßfilter.

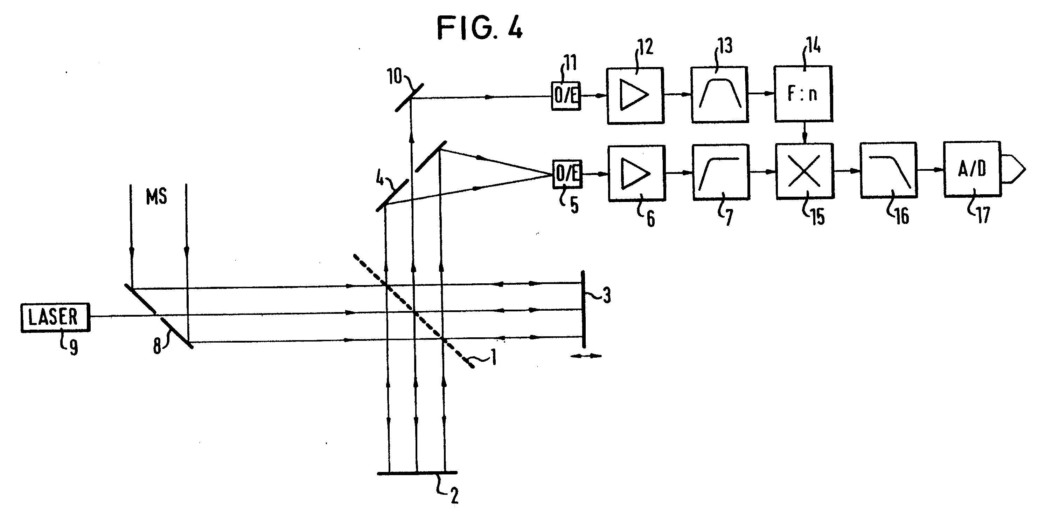

In Fig. 4 ist eine erfindungsgemäße Vorrichtung dargestellt, bei der das zweite elektrische Signal zur Mischung mit dem Interferogramm-Signal mittels eines Laserstrahls erzeugt wird. Den Kern der Meßanordnung bildet ein Michelson-Interferometer. Es besteht im wesentlichen aus einem Strahlteiler 1 in Form eines halbdurchlässigen Spiegels, der die empfangene Meßstrahlung MS in zwei Teilstrahlen zerlegt. Der eine, rechtwinklig nach unten reflektierte Teilstrahl wird von einem festen Spiegel 2 in Richtung des Strahlteilers 1 zurückgeworfen, während der andere Teilstrahl den halbdurchlässigen Strahlteiler 1 passiert und auf einen mit möglichst konstanter Vorschubgeschwindigkeit bewegten Spiegel 3 auftrifft. Von der Oberfläche des bewegten Spiegels 3 wird dieser Teilstrahl reflektiert und von der Rückseite des Strahlteilers 1 rechtwinklig nach oben geworfen. Dabei interferieren die beiden vom festen Spiegel 2 bzw. bewegten Spiegel 3 kommenden Teilstrahlen. Ein Umlenkspiegel 4 fängt das so erzeugte optische Interferogramm der Meßstrahlung MS auf und wirft es auf einen ersten opto-elektrischen Wandler 5. Dieser wandelt das optische Interferogramm in ein entsprechendes elektrisches Interferogramm-Signal um. Ein solches Interferogramm ist in Fig. 1 dargestellt. Nach Verstärkung in einem elektronischen Verstärker 6 durchläuft das Meßsignal ein elektrisches Hochpaß-Filter 7, um die nicht interessierenden tieffrequenten Signalanteile herauszufiltern.

Die Meßstrahlung MS wird mittels eines Einblendspiegels 8 in den Strahlengang des Interferometers eingeblendet.

Dieser Einblendspiegel 8 weist in der Mitte eine kleine Öffnung auf, durch welche der von einer Laserquelle 9 ausgesandte Laserstrahl parallel zur Meßstrahlung in das Interferometer einfällt und als Teilstrahl auf dem bewegten Spiegel 3 auftrifft. Von der Oberfläche des quer zur optischen Achse bewegten Spiegels 3 wird dieser Teilstrahl reflektiert. Das dort reflektierte Laserlicht überlagert sich mit dem am festen Spiegel 2 reflektierten Laser-Teilstrahl, sodaß ein Laser-Interferogramm entsteht. Dieses wird rechtwinklig nach oben geworfen und strahlt durch den Umlenkspiegel 4 hindurch, der zu diesem Zweck ebenfalls eine kleine Öffnung besitzt. Uber einen kleinen Umlenkspiegel 10 trifft das Laser-Interferogramm auf einen zweiten opto-elektrischen Wandler 11 auf. Das umgewandelte elektrische Signal am Ausgang des opto-elektrischen Wandlers 11 ist proportional der Abweichung der momentanen Ist-Geschwindigkeit des bewegten Spiegels 3 von dessen konstanter Soll-Geschwindigkeit frequenzmoduliert. Nach Durchlaufen eines Verstärkers 12 und eines Bandpaß-Filters 13 wird die Grundfrequenz dieses zweiten elektrischen Signals in einem Frequenzteiler 14 auf einen Frequenzwert heruntergeteilt, der in der Nähe der oberen Grenzfrequenz des Interferogramm-Signals liegt. In einem elektronischen Frequenzmischer 15 werden die beiden Signale phasengleich frequenzgemischt. Die am Ausgang des Frequenzmischers 15 erscheinenden Mischprodukte sind in Fig. 3 dargestellt. Die erhaltenen Differenzfrequenzen werden mittels eines nachgeschalteten Tiefpaß-Filters 16 herausgefiltert und einem Analog-Digital-Wandler 17 zugeführt.

Das am Ausgang des Analog-Digital-Wandlers 17 in digitaler Form vorliegende und das Interferogramm der Meßstrahlung MS darstellende Signal zeichnet sich durch eine wesentlich reduzierte Datenrate aus.

## Ansprüche

1. Verfahren zur Reduktion der Datenrate des bei der Fourierspektroskopie erhaltenen, digitalisierten Meßsignals, mit folgenen Merkmalen:
   - in einem Zweistrahl-Interferometer mit einem bewegten Spiegel, der mit möglichst konstanter Geschwindigkeit verschoben wird, wird ein Interferenzsignal von den beiden Teilstrahlen einer unbekannten, zu analysierenden Meßstrahlung erzeugt und in ein analoges erstes elektrisches Signal umgewandelt;
   - es wird ein zweites analoges elektrisches Signal erzeugt durch Einstrahlen eines Laserstrahls fester optischer Frequenz in das Interferometer parallel zur einfallenden Meßstrahlung, Detektion des optischen Interferenzsignals dieses Laserstrahls und durch Umwandlung des Laser-Interferenzsignals in ein entsprechendes elektrisches Signal, wobei dessen Frequenz proportional der Abweichung der momentanen Ist-Geschwindigkeit des bewegten Spiegels von dessen konstanter Soll-Geschwindigkeit moduliert ist;
   - es erfolgt eine Frequenzmischung des analogen ersten elektrischen Signals mit dem analogen zweiten elektrischen Signal;
   - die aufgrund dieser Frequenzmischung erhaltenen Differenzfrequenzen werden frequenzgefiltert;
   - das herausgefilterte Signal wird digitalisiert.

2. Verfahren nach Anspruch 1, dadurch gekennzeichnet, daß die Grundfrequenz des zweiten elektrischen Signals vor der Frequenzmischung auf einen Frequenzwert heruntergeteilt wird, der in der Nähe des Frequenzbereichs des das Interferogramm darstellenden Signals liegt.

3. Vorrichtung zur Durchführung des Verfahrens nach Anspruch 1, mit
   - einem Zweistrahl-Interferometer, dessen bewegter Spiegel (3) mit möglichst konstanter Geschwindigkeit verschiebbar ist;
   - einem opto-elektrischen Wandler (5) zur Umwandlung des Interferogramms in ein entsprechendes erstes elektrisches Signal;
   - einer Laserquelle (9), deren Laserstrahl parallel zur Meßstrahlung in das Interferometer einfällt;
   - einem weiteren opto-elektrischen Wandler (11) zur Umwandlung des Laser-Interferogramms in ein entsprechendes zweites elektrisches Signal;
   - einem Frequenzmischer (15) zur Mischung des das Interferogramm darstellenden, elektrischen ersten Signals mit dem elektrischen zweiten Signal;
   - einem elektrischen Tiefpaßfilter (16) zur Herausfilterung der im Frequenzmischer (15) entstandenen Differenzfrequenzen;
   - und einen Analog-Digital-Wandler (17) zur Digitalisierung des herausgefilterten Signals.

4. Vorrichtung nach Anspruch 3, dadurch gekennzeichnet, daß zwischen dem weiteren opto-elektrischen Wandler (11) und dem Frequenzmischer (15) ein elektrischer Frequenzteiler (14) vorgesehen ist.

5. Vorrichtung nach Anspruch 3 oder 4, dadurch gekennzeichnet, daß
   - vor der Meßöffnung des Interferometers (1, 2, 3) ein Einblendspiegel (8) vorgesehen ist, über den die Meßstrahlung eingeblendet wird,
   - und dieser Einblendspiegel (8) eine kleine Öffnung für den Laserstrahl aufweist.

6. Vorrichtung nach einem der Ansprüche 3 bis 5, dadurch gekennzeichnet, daß
   - ein Umlenkspiegel (4) vorgesehen ist, der das optische Interferogramm auf den opto-elektrischen Wandler (5) wirft und
   - dieser Umlenkspiegel (4) eine kleine Öffnung aufweist.

## Claims

1. Method for reducing the data rate of digitalised measuring signals obtained in Fourier spectroscopy, having the following features:
   - in a double-beam interferometer with a moving mirror, which is displaced at a substantially constant speed, an interference signal is produced from the two partial beams of an unknown measuring beam to be analysed and converted into a first electrical analogue signal;
   - a second electrical analogue signal is produced by directing a laser beam of fixed optical frequency into the interferometer in parallel with the incident measuring beam, detection of the optical interference signal of this laser beam and by converting the laser interference signal into a corresponding electrical signal, in which the frequency of the electrical signal is modulated in proportion to the deviation of the instantaneous actual speed of the moving mirror $V_s$ from its constant desired speed;
   - there results a frequency mixing of the first electrical analogue signal with the second electrical analogue signal;
   - the differential frequencies obtained as a result of this frequency mixing are filtered out;
   - the filtered-out signal is digitalised.

2. Method according to claim 1, characterised in that the base frequency of the second electrical signal, prior to frequency mixing, is sub-divided into a frequency value which is close to the frequency range of the signal representing the interferogram.

3. Device for carrying out the method according to claim 1, comprising
   - a double-beam interferometer whose moving mirror (3) is displaceable at a substantially constant speed;
   - an opto-electric converter (5) for converting the interferogram into a corresponding first electrical signal;
   - a laser source (9) whose laser beam strikes the interferometer in parallel with the measuring beam;
   - a further opto-electric converter (11) for converting the laser interferogram into a corresponding second electrical signal;
   - a frequency mixer (15) for mixing the first electrical signal representing the interferogram with the second electrical signal;
   - an electrical low pass filter (16) for filtering out differential frequencies produced in the frequency mixer (15);
   - and an analogue-digital-converter (17) for digitalising the filtered-out signals.

4. Device according to claim 3, characterised in that between the further opto-electric converter (11) and the frequency mixer (15) there is provided an electrical frequency splitter (14).

5. Device according to claim 3 or 4, characterised in that
   - in front of the measuring aperture of the interferometer (1, 2, 3) there is provided a focusing mirror (8) by means of which the measuring beam is focused;
   - and this focusing mirror (8) has a small aperture for the laser beam.

6. Device according to one of the claims 3 to 5, characterised in that
   - a reflecting mirror (4) is provided which directs the optical interferogram onto the opto-electric converter (5) and
- this reflecting mirror (4) has a small aperture.

**Revendications**

1. Procédé pour la réduction du flot de données du signal de mesure numérisé obtenu lors de la spectroscopie Fourier, présentant les caractéristiques suivantes :
   - dans un interféromètre à deux faisceaux muni d'un miroir mobile déplacé à une vitesse aussi constante que possible, un signal d'interférence entre les deux rayons partiels d'un rayonnement de mesure inconnu à analyser est produit et converti en un premier signal électrique analogique;
   - un deuxième signal électrique analogique est produit, par irradiation d'un rayon laser, à fréquence optique fixe, dans l'interféromètre, parallèlement au rayonnement de mesure incident, par détection du signal d'interférence optique de ce rayon laser, et par conversion du signal d'interférence laser en un signal électrique correspondant dont la fréquence est modulée proportionnellement à l'écart entre la vitesse réelle instantanée du miroir déplacé et sa vitesse de consigne constante;
   - il est produit un mélange de fréquence du premier signal électrique analogique avec le deuxième signal électrique analogique;
   - les fréquences de différence obtenues sur la base de ce mélange de fréquence sont filtrées en fréquence;
   - le signal résultant de la filtration est numérisé.

2. Procédé selon la revendication 1, caractérisé en ce que la fréquence de base du deuxième signal électrique est abaissée par division, avant le mélange de fréquence, à une valeur de fréquence qui est proche de la plage de fréquence du signal représentant l'interférogramme.

3. Dispositif pour mettre en oeuvre le procédé selon la revendication 1, avec
   - un interféromètre à deux faisceaux, dont le miroir mobile (3) est déplaçable à une vitesse aussi constante que possible;
   - un convertisseur opto-électrique (5), pour la conversion de l'interférogramme en un premier signal électrique;
   - une source laser (9), dont le rayon laser tombe dans l'interféromètre parallèlement au rayonnement de mesure;
   - un autre convertisseur opto-électrique (11), pour la conversion de l'interférogramme laser en un deuxième signal électrique correspondant;
   - un mélangeur de fréquence (15), pour mélanger le premier signal électrique, représentant l'interférogramme, au deuxième signal électrique:
   - un filtre passe-bas électrique (16), pour filtrer les fréquences de différence apparues dans le mélangeur de fréquence (15);
   - et un convertisseur analogique-numérique (17), pour numériser le signal obtenu par filtrage.

4. Dispositif selon la revendication 3, caractérisé en ce qu'un diviseur de fréquence (14) est prévu entre l'autre convertisseur opto-électrique (11) et le mélangeur de fréquence (15).

5. Dispositif selon la revendication 3 ou 4, caractérisé en ce que
   - devant l'ouverture de mesure de l'interféromètre (1,2,3) est prévu un miroir de superposition (8), par l'intermédiaire duquel est superposé le rayonnement de mesure,
   - et ce miroir de superposition (8) présentant une petite ouverture pour le rayon laser.

6. Dispositif selon l'une des revendications 3 à 5, caractérisé en ce que
   - un miroir de déviation (4) est prévu, qui projette l'interférogramme optique sur le convertisseur opto-électrique (5), et
   - ce miroir de déviation (4) présentant une petite ouverture.

# FIG. 1

# FIG. 2

# FIG. 3

# FIG. 4

EP 0 224 196 B1